# EUROPEAN PATENT APPLICATION

(11) **EP 4 715 920 A1**
(43) Date of publication of application: **25.03.2026**
(21) Application number: 25199858.9
(22) Date of filing: 03.09.2025
(51) Int. Cl.: H01M 10/04, H01M 50/107, H01M 50/474, H01M 50/477, H01M 50/586, H01M 50/593, H01M 50/595

(54) **SECONDARY BATTERY, PACK AND ELECTRONIC APPARATUS**

(30) Priority: 19.09.2024 CN 202422294562 U
(71) Applicant: AESC Japan Ltd., Yokohama-Shi, Kanagawa 220-0012 (JP)
(72) Inventor: GUO, Xueqin, Jiangyin City, Wuxi City 214443 (CN)
(74) Representative: Becker, Eberhard

(57) **Abstract**

A secondary battery (100), a pack, and an electronic apparatus are provided. The secondary battery (100) includes an electrode assembly (120) formed by a first electrode sheet (121), a first separator (141), a second electrode sheet (122), and a second separator (142) and an insulating film (300). A protruding end of a tail end (141e) of the first separator (141) and a tail end (142e) of the second separator (142) constitutes the tail end (120e) of the electrode assembly (120). A tail end (122e) of the second electrode sheet (122) extends beyond a tail end (121e) of the first electrode sheet (121). The tail end (120e) of the electrode assembly (120) extends beyond the tail end (122e) of the second electrode sheet (122). A starting end (300s) of the insulating film (300) extends beyond the tail end (120e) of the electrode assembly (120).

## Description

### BACKGROUND

### Technical Field

The disclosure relates to a secondary battery, a pack, and an electronic apparatus.

### Description of Related Art

In the field of new energy power batteries, the application of secondary batteries is increasing. For instance, secondary batteries (e.g., lithium-ion batteries) can be applied to electronic apparatuses such as vehicles, energy storage, mobile phones, tablets, wearable devices, power banks, electronic cigarettes, digital products, power tools, power devices, energy storage devices, etc. One type of secondary battery is a cylindrical battery, which includes an outer battery housing and an electrode assembly. The electrode assembly includes a positive electrode sheet, a first separator, a negative electrode sheet, and a second separator, which are stacked sequentially and wound into an electrode assembly then encapsulated in the outer battery housing. However, existing secondary batteries still need further improvement in certain aspects.

### SUMMARY

In view of the problems found in the related art, the disclosure aims to provide a secondary battery, a pack, and an electronic apparatus capable of at least improving the cylindricity of the cylindrical battery.

To achieve the above, an embodiment of the disclosure provides a secondary battery including an electrode assembly formed by sequentially stacking and winding a first electrode sheet, a first separator, a second electrode sheet, and a second separator and an insulating film. The insulating film is configured to fix a tail end of the electrode assembly. Herein, in a winding direction of the electrode assembly, the insulating film wraps around the electrode assembly for at least one turn. A protruding end of a tail end of the first separator and a tail end of the second separator constitutes the tail end of the electrode assembly. A tail end of the second electrode sheet extends beyond a tail end of the first electrode sheet. The tail end of the electrode assembly extends beyond the tail end of the second electrode sheet. A starting end of the insulating film extends beyond the tail end of the electrode assembly.

In some embodiments, in a direction opposite to the winding direction of the electrode assembly, a starting end of the second electrode sheet extends beyond a starting end of the first electrode sheet. In a cross-section perpendicular to a winding center line of the electrode assembly, an orthogonal projection of the winding center line on the cross-section forms a projection point. The projection point and the tail end of the first electrode sheet form a first connecting line, and the projection point and the starting end of the second electrode sheet form a second connecting line. The tail end of the second electrode sheet, the tail end of the electrode assembly, and the starting end and a tail end of the insulating film are located within a region between the first connecting line and the second connecting line in the winding direction.

In some embodiments, the projection point and the starting end of the first electrode sheet form a third connecting line, and an angle range of an angle formed between the third connecting line and the second connecting line in the winding direction is 170° to 190°. The tail end of the first electrode sheet is located within a region between the third connecting line and the second connecting line in the winding direction. Alternatively, in some embodiments, in a direction opposite to the winding direction of the electrode assembly, the starting end of the second electrode sheet extends beyond the starting end of the first electrode sheet by 1 to 2 turns. Alternatively, in some embodiments, an angle range of an angle formed between the first connecting line and the second connecting line in the winding direction is 80° to 90°.

In some embodiments, the projection point and the tail end of the second electrode sheet form a fourth connecting line. An angle formed between the first connecting line and the fourth connecting line in the winding direction is A1, where 0°<A1≤30°.

In some embodiments, the projection point and the tail end of the second electrode sheet form a fourth connecting line, and the projection point and the tail end of the electrode assembly form a fifth connecting line. An angle formed between the fourth connecting line and the fifth connecting line in the winding direction is A2, where 0° < A2≤30°.

In some embodiments, the projection point and the tail end of the electrode assembly form a fifth connecting line, and the projection point and the starting end of the insulating film form a sixth connecting line. An angle formed between the fifth connecting line and the sixth connecting line in the winding direction is A3, where 7.7°≤A3≤30°.

In some embodiments, the projection point and the starting end of the insulating film form a sixth connecting line, and the projection point and the tail end of the insulating film form a seventh connecting line. An angle formed between the sixth connecting line and the seventh connecting line in the winding direction is A4, where 0° < A4≤30°.

In some embodiments, the secondary battery is a cylindrical battery including a battery housing having an opening at one end in a height direction of the cylindrical battery and an end wall at another end in the height direction and is provided with a rolling groove protruding toward an inner portion of the battery housing at the opening. The electrode assembly is accommodated in the battery housing, and the rolling groove and the end wall restrict movement of the electrode assembly in the height direction. In the winding direction of the electrode assembly, a tail end of the insulating film extends beyond the tail end of the electrode assembly.

An embodiment of the disclosure further provides a pack including the secondary battery according to any one of the above.

An embodiment of the disclosure further provides an electronic apparatus including the secondary battery according to any one of the above and the pack according to any one of the above.

The beneficial technical effects provided by the disclosure include the following.

In the above technical solution, by arranging the tail end of the insulating film behind the tail end of the electrode assembly, the overlapping portion of the two layers of insulating films is positioned behind the tail end of the electrode assembly where the outer circumference thickness of the electrode assembly is thinner. In this way the diameter difference of the electrode assembly is reduced, and the cylindricity of the electrode assembly is optimized.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings can be obtained based on these drawings without an inventive effort.
FIG. 1 is a schematic view illustrating an electronic apparatus being a vehicle according to an embodiment of this disclosure.
FIG. 2 is a three-dimensional view illustrating a secondary battery according to an embodiment of the disclosure.
FIG. 3 is a cross-sectional view illustrating the secondary battery according to an embodiment of the disclosure.
FIG. 4 is a cross-sectional view of an electrode assembly of the secondary battery in a cross-section perpendicular to a winding center line according to an embodiment of the disclosure.
FIG. 5A and FIG. 5B are respectively partial enlarged schematic views of structures at tail ends of a first separator and a second separator in the secondary battery according to another embodiment of the disclosure.

### DESCRIPTION OF THE EMBODIMENTS

For a better understanding of the spirit of the embodiments of this disclosure, further explanations are provided below together with some preferred embodiments of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "basically", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components. In addition, the following embodiments in the disclosure and the features in the embodiments may be combined with each other in the case of no conflict. The disclosure is described in detail with reference to the accompanying figures combined with the embodiments.

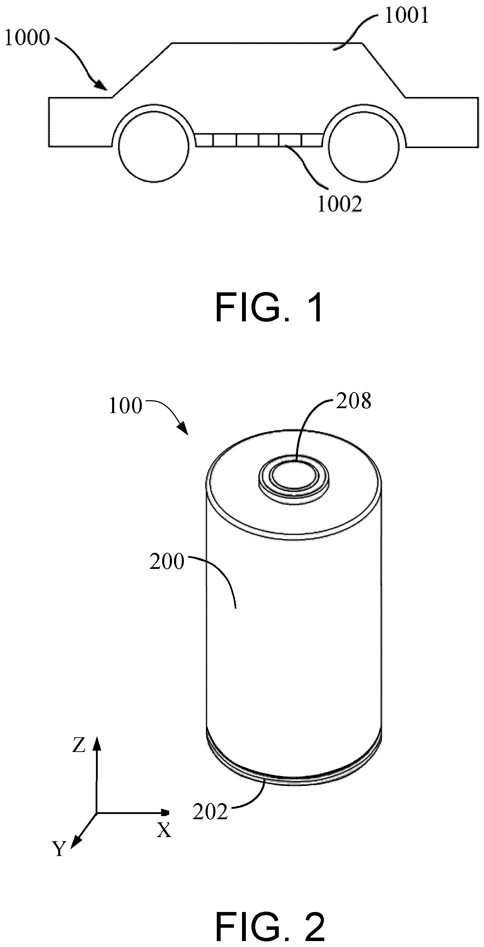

Referring to FIG. 1, for ease of description, the following embodiments are described by taking an electronic apparatus as a vehicle 1000. However, it is not difficult to understand that the electronic apparatus provided by the disclosure is not limited to a vehicle, and the electrical apparatus may be a vehicle, a mobile phone, a portable device, a notebook computer, a ship, a spacecraft, an electric toy, an electric tool, etc.

A pack 1002 is disposed inside the vehicle 1000, and the pack 1002 may be disposed at a bottom portion (as shown in FIG. 1), a front portion, a tail portion, or any other appropriate position of a vehicle body 1001. The pack 1002 may be used to power the vehicle 1000, for example, the pack 1002 may act as an operating power source or a driving power source of the vehicle 1000. The pack 1002 may include a plurality of cylindrical batteries (e.g., a secondary battery 100 in FIG. 2) and a battery housing accommodating the plurality of cylindrical batteries.

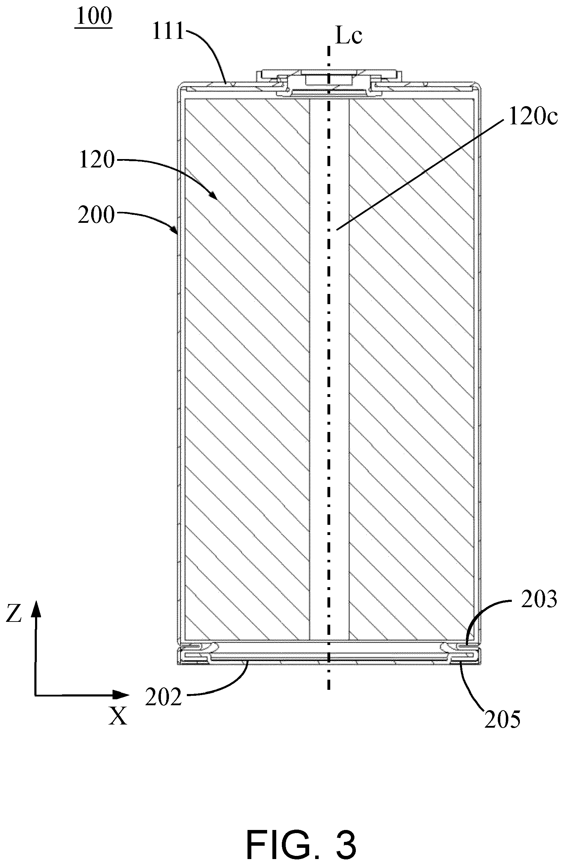

FIG. 2 is a three-dimensional view illustrating the secondary battery 100 according to an embodiment of the disclosure, and FIG. 3 is a cross-sectional view illustrating the secondary battery 100 according to an embodiment of the disclosure. In this embodiment, the secondary battery 100 is a cylindrical battery. Referring to FIG. 2 and FIG. 3 together, the secondary battery 100 may include an electrode assembly 120, an electrolyte, an outer battery housing 200, and a cap plate 202. The outer battery housing 200 and the cap plate 202 are components that accommodate the electrode assembly 120 and the electrolyte together. A material of the outer battery housing 200 may be any one of various available materials, such as copper, iron, aluminum, steel, aluminum alloy, etc. The outer battery housing 200 may be in a cylindrical shape and define an accommodating cavity, with the electrode assembly 120 arranged inside the accommodating cavity. A diameter size of the outer battery housing 200 may be determined according to a specific size of the electrode assembly 120, such as 18 mm, 21 mm, 46 mm, etc. In some embodiments, the secondary battery 100 may be a 4680 cylindrical battery (a diameter is 46 mm and a height is 80 mm), the secondary battery 100 may be a 4695 cylindrical battery (the diameter is 46 mm and the height is 95 mm), or the secondary battery 100 may be a 46120 cylindrical battery (the diameter is 46 mm and the height is 120 mm).

The outer battery housing 200 may be connected to a negative electrode of the electrode assembly 120. One end of the outer battery housing 200 in a height direction Z may have a mounting opening 205, and the cap plate 202 is arranged at the mounting opening 205 and seals the accommodating cavity. The secondary battery 100 may also have an electrode post 208 at one end opposite to the cap plate 202, and the electrode post 208 may be connected to a positive electrode of the electrode assembly 120. It should be understood that the electrode post 208 and the outer battery housing 200 are in an insulated fitting state to avoid battery short circuit.

Referring to FIG. 3, the outer battery housing 200 also has a crimping portion 203 protruding inward at a position adjacent to the mounting opening 205. In the height direction Z of the secondary battery 100, the electrode assembly 120 is arranged between an end wall 111 and the crimping portion 203, and the crimping portion 203 can restrict axial movement (the movement in the height direction Z) of the electrode assembly 120 between the end wall 111 and the crimping portion 203 of the battery outer battery housing 200. A weak portion may be arranged on the cap plate 202, so that when thermal runaway occurs in the battery, the high-temperature and highpressure emissions from the interior may be discharged to the outside from the bottom of the battery after breaking through the weak portion on the cap plate 202, so the emissions are well discharged.

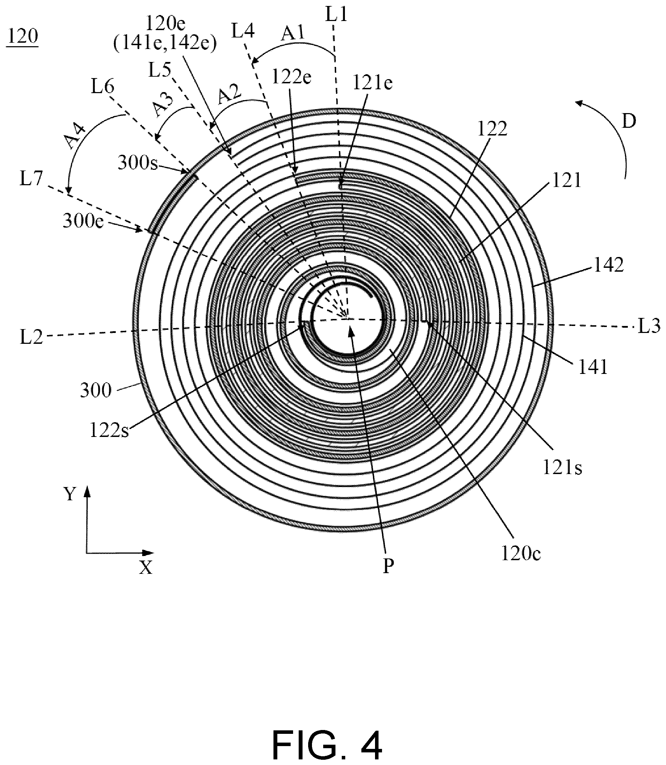

The electrode assembly 120 may include a first electrode sheet, a first separator, a second electrode sheet, and a second separator that are sequentially stacked and wound (as described below with reference to FIG. 4), and the electrode assembly 120 may have a winding center line Lc. Further, the electrode assembly 120 also has a winding center hole 120c.

The electrode assembly 120 has a positive tab and a negative tab arranged at both ends in the height direction Z of the secondary battery 100. In some embodiment, the positive tab 125 faces the end wall 111 and is electrically connected to the electrode post 208, making the electrode post 208 positively charged. The negative tab 124 faces the mounting opening 205 and is electrically connected to the outer battery housing 200, making the outer battery housing 200 negatively charged. However, in other embodiments, the negative tab may be connected to the electrode post 208, and the positive tab 125 is connected to the outer battery housing 200.

FIG. 4 is a cross-sectional view of the electrode assembly 120 of the secondary battery in a cross-section perpendicular to the winding center line Lc according to an embodiment of the disclosure. It should be understood that the wound electrode assembly 120 has the winding center line Lc extending in the direction Z (see FIG. 3), an X-Y plane shown in FIG. 4 is a cross-section perpendicular to the winding center line Lc, and a point P is a projection point of an orthogonal projection of the winding center line Lc on this cross-section. The electrode assembly 120 also has the winding center hole 120c, and the winding center hole 120c may have a circular shape in the cross-section shown in FIG. 4. The projection point P may be the center of the winding center hole 120c.

Referring to FIG. 4, the electrode assembly 120 may include a first electrode sheet 121, a first separator 141, a second electrode sheet 122, and a second separator 142. The first electrode sheet 121, the first separator 141, the second electrode sheet 122, and the second separator 142 are sequentially stacked and then wound in a winding direction D to form the electrode assembly 120. In addition, the secondary battery may further include an electrolyte, and the electrolyte may be located among the first electrode sheet 121, the first separator 141, the second electrode sheet 122, and the second separator 142. In some embodiments, the first electrode sheet 121 is a positive electrode sheet, and the second electrode sheet 122 is a negative electrode sheet.

The first electrode sheet and the second electrode sheet may be a positive electrode sheet and a negative electrode sheet, respectively. The positive electrode sheet may include a positive current collector and a positive active material layer coated on both surfaces of the positive current collector. A portion of the positive current collector not coated with the positive active material layer constitutes a positive tab. The negative electrode sheet may include a negative current collector and a negative active material layer coated on both surfaces of the negative current collector. A portion of the negative current collector not coated with the negative active material layer constitutes a negative tab. Taking a lithium-ion battery as an example, a material of the positive current collector may be aluminum, the positive active material layer may include a positive active material, and the positive active material may be lithium cobalt oxide, lithium iron phosphate, ternary lithium, or lithium manganese oxide, etc. A material of the negative current collector may be copper, the negative active material layer may include a negative active material, and the negative active material may be carbon or silicon, etc. In some embodiments, a material of the first separator 141 and the second separator 142 may be, for example, polypropylene (PP) or polyethylene (PE), etc.

By coating the positive active material layer on the positive electrode sheet, the positive active material layer contains lithium ions. When the positive active material layer contacts the electrolyte and the battery is charging, the lithium ions in the positive active material layer move through the electrolyte to the negative active material layer and are embedded into the negative active material layer. This process is the activation process of lithium ions and is also the charging process of the battery.

The secondary battery may further include an insulating film 300, and the insulating film 300 may be used to fix a tail end of the electrode assembly 120. In this embodiment, the insulating film 300 surrounds the electrode assembly 120 for at least one turn. In some embodiments, the insulating film 300 may be synthesized from, for example, PP, PE, polyethylene terephthalate (PET), polyvinyl chloride (PVC), or other polymer materials. The insulating film 300 may be used to electrically isolate the electrode assembly 120 from the outside.

Referring to FIG. 4 again, in the winding direction D of the electrode assembly 120, a tail end 122e of the second electrode sheet 122 extends beyond a tail end 121e of the first electrode sheet 121, so that the second electrode sheet 122 may cover the tail end 121e of the first electrode sheet 121. In this way, lithium ions detached from the positive active material layer of the first electrode sheet 121 (the positive electrode sheet) may smoothly embed into the negative active material layer of the second electrode sheet 122 (the negative electrode sheet), so that a lithium plating phenomenon is prevented from occurring on the second electrode sheet 122 (the negative electrode sheet) at the tail end. Based on similar reasons, in a direction opposite to the winding direction D, a starting end 122s of the second electrode sheet 122 extends beyond a starting end 121s of the first electrode sheet 121, that is, at a winding start of the electrode assembly 120, the second electrode sheet 122 is wound for an additional length compared to the first electrode sheet 121.

In some embodiments, in the winding direction D of the electrode assembly 120, the starting end 122s of the second electrode sheet 122 extends beyond the starting end 121s of the first electrode sheet 121. By arranging the starting end 122s of the second electrode sheet 122 to extend beyond the starting end 121s of the first electrode sheet 121, lithium ions detached from the positive active material layer of the first electrode sheet 121 (the positive electrode sheet) may smoothly embed into the negative active material layer of the second electrode sheet 122 (the negative electrode sheet), so that a lithium plating phenomenon is prevented from occurring on the negative electrode sheet at the starting end. However, the outermost turn of the wound electrode assembly 120 is still prone to a lithium plating phenomenon.

According to the embodiments of the disclosure, in the winding direction D of the electrode assembly 120, a protruding end of a tail end 141e of the first separator 141 and a tail end 142e of the second separator 142 constitutes a tail end 120e of the electrode assembly 120. In the embodiment shown in FIG. 4, the tail end 141e of the first separator 141 and the tail end 142e of the second separator 142 are substantially aligned. It should be understood that in the disclosure, alignment means that the tail ends 141e and 142e of the first separator 141 and the second separator 142 differ within 5mm. In such an embodiment, the protruding end of the tail ends 141e and 142e of the first separator 141 and the second separator 142 constitutes the tail end 120e of the electrode assembly 120. In the case where the difference between the tail ends 141e and 142e of the first separator 141 and the second separator 142 is 0mm, the tail ends 141e and 142e of the first separator 141 and the second separator 142 may be used as the tail end 120e of the electrode assembly 120 together.

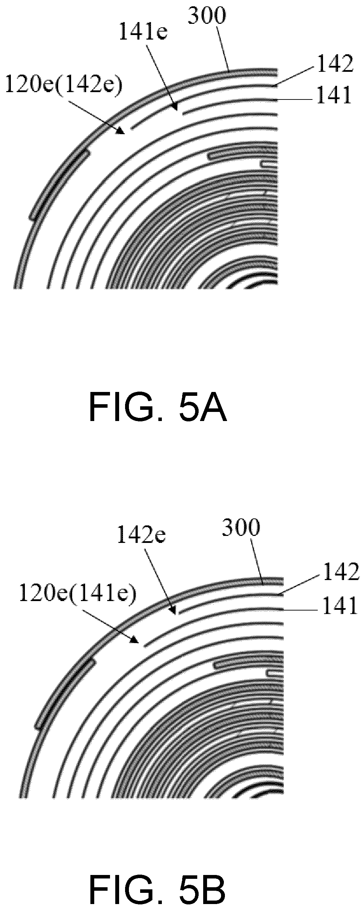

In the embodiment shown in FIG. 4, the tail ends 141e and 142e of the first separator 141 and the second separator 142 may also not be aligned. FIG. 5A and FIG. 5B are respectively partial enlarged schematic views of structures at tail ends of a first separator and a second separator in the secondary battery according to another embodiment of the disclosure. Referring to FIG. 5A, the tail end 142e of the second separator 142 extends beyond the tail end 141e of the first separator 141, and in this embodiment, the tail end 142e of the second separator 142 is the outermost end and constitutes the tail end 120e of the electrode assembly 120. Referring to FIG. 5B, the tail end 141e of the first separator 141 extends beyond the tail end 142e of the second separator 142, and in this embodiment, the tail end 141e of the first separator 141 is the outermost end and constitutes the tail end 120e of the electrode assembly 120.

Referring to FIG. 4 again, in the winding direction D of the electrode assembly 120, the tail end 120e of the electrode assembly 120 extends beyond the tail end 122e of the second electrode sheet 122. A starting end 300s of the insulating film 300 extends beyond the tail end 120e of the electrode assembly 120.

In the above technical solution, by arranging the starting end 300s of the insulating film 300 behind the tail end 120e of the electrode assembly 120 in the winding direction D, an overlapping portion of two layers of insulating films 300 is positioned at a location where the outer turn of the electrode assembly has a relatively small thickness, so that a diameter difference of the electrode assembly is reduced, and cylindricity of the electrode assembly is optimized.

The projection point P and the tail end 121e of the first electrode sheet 121 form a first connecting line L1, and the projection point P and the starting end 122s of the second electrode sheet 122 form a second connecting line L2. The tail end 122e of the second electrode sheet 122, the tail end 120e of the electrode assembly 120, and the starting end 300s and a tail end 300e of the insulating film 300 are located within a region between the first connecting line L1 and the second connecting line L2 in the winding direction D. That is, in the winding direction D, the tail end 120e of the electrode assembly 120, the tail end 122e of the second electrode sheet 122, and the starting end 300s and tail end 300e of the insulating film 300 all do not extend beyond the starting end 122s of the second electrode sheet 122. A region between the tail end 121e of the first electrode sheet 121 and the starting end 122s of the second electrode sheet 122 (corresponding to the region between the first connecting line L1 and the second connecting line L2) is typically the region where the outer turn of the electrode assembly has the smallest thickness. By arranging the tail end 122e of the second electrode sheet 122, the tail end 120e of the electrode assembly 120, and the starting end 300s and tail end 300e of the insulating film 300 all within this region, the diameter difference of the electrode assembly may be reduced, and the cylindricity of the electrode assembly may be optimized.

In some embodiments, as shown in FIG. 4, in the winding direction D, the tail end 300e of the insulating film 300 extends beyond the tail end 120e of the electrode assembly 120. In this way, the stacked overlapping portion of the two layers of insulating films 300 is positioned at a location where the outer turn of the electrode assembly has a relatively small thickness, i.e., located between the tail end 120e of the electrode assembly 120 and the starting end 122s of the second electrode sheet 122, so that the diameter difference of the electrode assembly may be effectively reduced, and the cylindricity of the electrode assembly is optimized.

In some embodiments, in the direction opposite to the winding direction D, the starting end 122s of the second electrode sheet 122 extends beyond the starting end 121s of the first electrode sheet 121 by 1 to 2 turns. If the starting end 122s of the second electrode sheet 122 extends beyond the starting end 121s of the first electrode sheet 121 by less than 1 turn, the lithium plating phenomenon may not be effectively avoided. If the starting end 122s of the second electrode sheet 122 extends beyond the starting end 121s of the first electrode sheet 121 by more than 2 turns, energy density of the battery may be adversely affected. Therefore, arranging the starting end 122s of the second electrode sheet 122 to extend by 1 to 2 turns may avoid the lithium plating phenomenon without excessively affecting the energy density.

Further, the projection point P and the starting end 121s of the first electrode sheet 121 form a third connecting line L3. In the winding direction D, an angle formed between the third connecting line L3 and the second connecting line L2 ranges from 170° to 190°, preferably 180°. In this embodiment, in the direction opposite to the winding direction D, the starting end 122s of the second electrode sheet 122 extends beyond the starting end 121s of the first electrode sheet 121 by approximately 1.5 turns, such that the angle formed between the third connecting line L3 and the second connecting line L2 is approximately 180°. The tail end 121e of the first electrode sheet 121 is located within an angular region formed by the third connecting line L3 and the second connecting line L2 (the region above the second connecting line L2 and the third connecting line L3 in FIG. 4). In the winding direction D, an angle formed between the first connecting line L1 and the second connecting line L2 ranges from 80° to 90°, preferably 90°. In some embodiments, an arc length between the first connecting line L1 and the second connecting line L2 is less than or equal to 35 mm (corresponding to an arc length within a 90° range of a circumference of the electrode assembly). In some embodiments, the arc length between the first connecting line L1 and the second connecting line L2 may be equal to the diameter of the electrode assembly × 3.14/4, i.e., corresponding to the arc length within a 90° range of the circumference of the electrode assembly. In some embodiments, for a 46-series cylindrical battery, the diameter of the electrode assembly may be approximately 44.7 mm. When the battery is a cylindrical battery, because a spacing between the electrode assembly 120 and the outer battery housing 200 of the cylindrical battery is relatively small, the electrode assembly 120 in the cylindrical battery may expand radially. Therefore, through the corresponding design provided by the disclosure, the technical problem of lithium plating at the outer turn of the electrode assembly 120 is further improved.

The projection point P and the tail end 122e of the second electrode sheet 122 form a fourth connecting line L4. An angle formed between the first connecting line L1 and the fourth connecting line L4 in the winding direction D is A1, where 0°<A1≤30°. In some embodiments, an arc length of a segment corresponding to the angle A1 ranges from 3 mm to 11.7 mm. In some embodiments, the arc length of the segment corresponding to the angle A1 may be equal to the diameter of the electrode assembly × 3.14/12, i.e., corresponding to the arc length within a 30° range of the circumference of the electrode assembly.

The projection point P and the tail end 120e of the electrode assembly 120 form a fifth connecting line L5. An angle formed between the fourth connecting line L4 and the fifth connecting line L5 in the winding direction D is A2, where in some embodiments, 5°<A2<160°, and preferably, 0°<A2≤30°. In some embodiments, the arc length of the segment corresponding to the angle A1 ranges from 3 mm to 11.7 mm. In some embodiments, an arc length of a segment corresponding to the angle A2 may be equal to the diameter of the electrode assembly × 3.14/12.

The projection point P and the starting end 300s of the insulating film 300 form a sixth connecting line L6. An angle formed between the fifth connecting line L5 and the sixth connecting line L6 in the winding direction D is A3, where 7.7°≤A3≤30°. In some embodiments, an arc length of a segment corresponding to the angle A3 is greater than 3 mm.

The projection point P and the tail end 300e of the insulating film 300 form a seventh connecting line L7. An angle formed between the sixth connecting line L6 and the seventh connecting line L7 in the winding direction D is A4, where 0°<A4≤30°. In some embodiments, an arc length of a segment corresponding to the angle A4 ranges from 3 mm to 11.7 mm. In some embodiments, the arc length of the segment corresponding to the angle A4 may be equal to the diameter of the electrode assembly × 3.14/12.

Through the angle design of the angles A1 to A4 between the first connecting line L1 and the second connecting line L2, thickness variation caused by the tail end 121e of the first electrode sheet 121, the tail end 122e of the second electrode sheet 122, and the starting end 300s and tail end 300e of the insulating film 300 may be uniform, so that the cylindricity of the electrode assembly may be further improved.

The above description is only the preferred embodiments of the disclosure and is not intended to limit the disclosure. For a person having ordinary skill in the art, the disclosure may have various changes and variations. Any modifications, equivalent replacements, improvements, etc., made within the spirit and principles of the disclosure should be included within the protection scope of the disclosure.

## Claims

1. A secondary battery (100), comprising:
an electrode assembly (120), formed by sequentially stacking and winding a first electrode sheet (121), a first separator (141), a second electrode sheet (122), and a second separator (142); and
an insulating film (300), configured to fix a tail end (120e) of the electrode assembly (120),
wherein in a winding direction (D) of the electrode assembly (120), the insulating film (300) wraps around the electrode assembly (120) for at least one turn, a protruding end of a tail end (141e) of the first separator (141) and a tail end (142e) of the second separator (142) constitutes the tail end (120e) of the electrode assembly (120), a tail end (122e) of the second electrode sheet (122) extends beyond a tail end (121e) of the first electrode sheet (121), the tail end (120e) of the electrode assembly (120) extends beyond the tail end (122e) of the second electrode sheet (122), and a starting end (300s) of the insulating film (300) extends beyond the tail end (120e) of the electrode assembly (120).

2. The secondary battery (100) according to claim 1, wherein
in a direction opposite to the winding direction (D) of the electrode assembly (120), a starting end (122s) of the second electrode sheet (122) extends beyond a starting end (121s) of the first electrode sheet (121),
in a cross-section perpendicular to a winding center line (Lc) of the electrode assembly (120), an orthogonal projection of the winding center line (Lc) on the cross-section forms a projection point (P), the projection point (P) and the tail end (121e) of the first electrode sheet (121) form a first connecting line (L1), and the projection point (P) and the starting end (122s) of the second electrode sheet (122) form a second connecting line (L2),
the tail end (122e) of the second electrode sheet (122), the tail end (120e) of the electrode assembly (120), and the starting end (300s) and a tail end (300e) of the insulating film (300) are located within a region between the first connecting line (L1) and the second connecting line (L2) in the winding direction (D).

3. The secondary battery (100) according to claim 2, wherein
the projection point (P) and the starting end (121s) of the first electrode sheet (121) form a third connecting line (L3), and an angle range of an angle formed between the third connecting line (L3) and the second connecting line (L2) in the winding direction (D) is 170° to 190°,
the tail end (121e) of the first electrode sheet (121) is located within a region between the third connecting line (L3) and the second connecting line (L2) in the winding direction (D),
in a direction opposite to the winding direction (D) of the electrode assembly (120), the starting end (122s) of the second electrode sheet (122) extends beyond the starting end (121s) of the first electrode sheet (121) by 1 to 2 turns, or
an angle range of an angle formed between the first connecting line (L1) and the second connecting line (L2) in the winding direction (D) is 80° to 90°.

4. The secondary battery (100) according to claim 2, wherein
the projection point (P) and the tail end (122e) of the second electrode sheet (122) form a fourth connecting line (L4), and an angle formed between the first connecting line (L1) and the fourth connecting line (L4) in the winding direction (D) is A1, where 0°<A1≤30°.

5. The secondary battery (100) according to claim 2, wherein
the projection point (P) and the tail end (122e) of the second electrode sheet (122) form a fourth connecting line (L4), the projection point (P) and the tail end (120e) of the electrode assembly (120) form a fifth connecting line (L5), and an angle formed between the fourth connecting line (L4) and the fifth connecting line (L5) in the winding direction (D) is A2, where 0° < A2≤30°.

6. The secondary battery (100) according to claim 2, wherein
the projection point (P) and the tail end (120e) of the electrode assembly (120) form a fifth connecting line (L5), the projection point (P) and the starting end (300s) of the insulating film (300) form a sixth connecting line (L6), and an angle formed between the fifth connecting line (L5) and the sixth connecting line (L6) in the winding direction (D) is A3, where 7.7°≤A3≤30°.

7. The secondary battery (100) according to claim 2, wherein
the projection point (P) and the starting end (300s) of the insulating film (300) form a sixth connecting line (L6), the projection point (P) and the tail end (300e) of the insulating film (300) form a seventh connecting line (L7), and an angle formed between the sixth connecting line (L6) and the seventh connecting line (L7) in the winding direction (D) is A4, where 0° < A4≤30°.

8. The secondary battery (100) according to claim 1, wherein
the secondary battery (100) is a cylindrical battery,
the cylindrical battery comprises a battery housing having an opening at one end in a height direction (Z) of the cylindrical battery and an end wall (111) at another end in the height direction (Z) and is provided with a rolling groove protruding toward an inner portion of the battery housing at the opening,
the electrode assembly (120) is accommodated in the battery housing, and the rolling groove and the end wall (111) restrict movement of the electrode assembly (120) in the height direction (Z),
in the winding direction (D) of the electrode assembly (120), a tail end (300e) of the insulating film (300) extends beyond the tail end (120e) of the electrode assembly (120).

9. A pack (1002), comprising the secondary battery (100) according to claim 1.

10. An electronic apparatus, comprising at least one pack (1002) according to claim 9.
